# EUROPEAN PATENT APPLICATION

(11) **EP 3 054 406 A1**
(43) Date of publication of application: **10.08.2016**
(21) Application number: 14847892.8
(22) Date of filing: 30.09.2014
(51) Int. Cl.: G06Q 20/40, G06Q 20/32

(54) **SYSTEM FOR PROVIDING CARD PAYMENT SERVICE BY USING SMART DEVICE AND METHOD THEREFOR**

(30) Priority: 30.09.2013 KR 20130116017
(71) Applicant: Jeong, Hye Jin, Jeollabuk-do 570-962 (KR)
(72) Inventor: Jeong, Hye Jin, Jeollabuk-do 570-962 (KR)
(74) Representative: ABG Patentes, S.L.
(86) International application number: PCT/KR2014/009188
(87) International publication number: WO 2015/047020

(57) **Abstract**

Disclosed are a system for providing card settlement service using smart device and a method thereof according to the present invention. The system for providing a card settlement service according to the present invention includes: a card reader performing user authentication by using a password of a user using a card and determining whether the card is a counterfeit card as a result of the user authentication and acquiring card information from the card according to a result of the determination and encoding and transmitting the acquired card information; a smart device generating, when receiving the encoded card information, settlement information including the received card information, a settlement amount, and franchise information and transmitting the generated settlement information; a relay server transferring the transmitted settlement information; and a settlement processing server processing, when receiving the settlement information, card settlement based on the card information, the settlement amount, and the franchise information included in the received settlement information.

## Description

### [Technical Field]

The present invention relates to a method for providing a card settlement service, and particularly, to a system for providing a card settlement service using a smart device and a method thereof, which encodes card information acquired when the card information is acquired to settle a card based on the encoded card information and receives a password of a user together with acquiring the card information to perform user authentication by using the received password of the user.

### [Background Art]

With expansion of an electronic settlement, a credit settlement service based on a card settlement of a credit card, a check card, a debit card, or the like (hereinafter, referred to as the credit card) is generalized. The credit settlement service represents a settlement scheme using electronic approval infrastructure, in which a user purchases an article or a service by the card settlement and thereafter, pays a service charge of the article or the service to a financial institution such as a card company, or the like and a franchise receives payment of sale money of the article or the service from the financial institution.

In general, the franchise uses a dedicated terminal (hereinafter, referred to as a card terminal) with a card reader for the credit card settlement. The dedicated terminal with the card reader reads information stored in a magnetic strip of the credit card and transmits settlement information including the read information to a settlement agency server of a Value Added Network (VAN) company providing an agency service associated with the card settlement to receive a settlement admission. In general, the card terminal uses a wired terminal that transmits/receives a settlement admission statement through a public switched telephone network (PSTN).

The wired card terminal is used at a fixed place, while a mobile seller of the franchise sells the article or the service while moving to various areas, an employee of a parcel delivery service company, and the like directly receive an article or service charge by visiting a client, or a wire type conventional card terminal is difficult to use the article or the service when a communication network facility such as the PSTN or the Internet is not provided in the franchise. In order to resolve such inconvenience, in recent years, there has been a trend that a wireless card terminal transmitting/receiving the settlement admission statement through a radio signal is developed and increasingly used.

The wireless card terminal is manufactured as the dedicated terminal for the credit card settlement and is relatively expensive and each of the mobile sellers of the franchise needs to carry the wireless card terminal, and as a result, it is difficult to manage and operate the wireless card terminal.

In recent years, a point of sales system (POS) using a smart device has been used and when the conventional POS is used, a counterfeit accident of information of the credit card or RFID has frequently occurred. Moreover, an accident in which card information is exposed by hacking the card information collected in the smart device or a computer frequently occurs in the case of the credit card.

### [Disclosure]

### [Technical Problem]

An object of the present invention has been made in an effort to provide a system for providing a card settlement service using a smart device which encodes card information acquired when the card information is acquired to settle a card based on the encoded card information and receives a password of a user together with acquiring the card information to perform user authentication by using the received password of the user.

Another object of the present invention is to provide a method for providing a card settlement service using a smart device which encodes card information acquired when the card information is acquired to settle a card based on the encoded card information and receives a password of a user together with acquiring the card information to perform user authentication by using the received password of the user.

However, the objects of the present disclosure are not limited to the aforementioned objects, and other objects, which are not mentioned above, will be apparent to a person having ordinary skill in the art from the following description.

### [Technical Solution]

In order to achieve the objects, according to an aspect of the present invention, a system for providing a card settlement service includes: a card reader performing user authentication by using a password of a user using a card, determining whether the card is a counterfeit card as a result of the user authentication, acquiring card information from the card according to a result of the determination, and encoding and transmitting the acquired card information; a smart device generating, when receiving the encoded card information, settlement information including the received card information, a settlement amount, and franchise information and transmitting the generated settlement information; a relay server transferring the transmitted settlement information; and a settlement processing server processing, when receiving the settlement information, card settlement based on the card information, the settlement amount, and the franchise information included in the received settlement information.

Preferably, the card reader receives the password of the user using the card from the smart device and performs the user authentication by using the received password of the user to determine whether the card is the counterfeit card.

Preferably, the card reader may acquire the card information from the card when determining that the card is not the counterfeit card by succeeding in the user authentication as the determination result, and encode the acquired card information by using a predetermined secret key or public key and transmit the encoded card information.

Preferably, the smart device may receive a settlement amount to be settled from the user when receiving the encoded card information and generate and transmit the settlement information including the franchise information together with the card information and the settlement amount.

Preferably, the relay server may decode the card information in the received settlement information when receiving the settlement information and transmit the settlement amount and the franchise information to the settlement processing server together with the decoded card information.

Preferably, the settlement processing server may decode the card information in the received settlement information when receiving the settlement information and process the card settlement based on the settlement amount and the franchise information together with the decoded card information.

Preferably, the card information as information acquired from the card may include a card number, an expiration date, and a card company.

According to another aspect of the present invention, a system for providing a card settlement service includes: a card reader performing user authentication by using a password of a user using a card, determining whether the card is a counterfeit card as a result of the user authentication, acquiring card information from the card according to a result of the determination, and encoding and transmitting the acquired card information.

Preferably, the card reader receives the password of the user using the card from the smart device and performs the user authentication by using the received password of the user to determine whether the card is the counterfeit card.

Preferably, the card reader may acquire the card information from the card when determining that the card is not the counterfeit card by succeeding in the user authentication as the determination result, and encode the acquired card information by using a predetermined secret key or public key and transmit the encoded card information.

According to yet another aspect of the present invention, a method for providing a card settlement service includes: (a) performing, by a card reader, user authentication by using a password of a user using a card, determining whether the card is a counterfeit card as a result of the user authentication, acquiring card information from the card according to a result of the determination, and encoding and transmitting the acquired card information; (b) generating, by a smart device, when receiving the encoded card information, settlement information including the received card information, a settlement amount, and franchise information and transmitting the generated settlement information; (c) transferring, by a relay server, the transmitted settlement information; and (d) processing, by a settlement processing server, when receiving the settlement information, card settlement based on the card information, the settlement amount, and the franchise information included in the received settlement information.

Preferably, in the step (a), the card reader receives the password of the user using the card from the smart device and performs the user authentication by using the received password of the user to determine whether the card is the counterfeit card.

Preferably, in the step (a), the card reader may acquire the card information from the card when determining that the card is not the counterfeit card by succeeding in the user authentication as the determination result and encode the acquired card information by using a predetermined secret key or public key and transmit the encoded card information.

Preferably, in the step (b), the smart device may receive a settlement amount to be settled from the user when receiving the encoded card information and generate and transmit the settlement information including the franchise information together with the card information and the settlement amount.

Preferably, in the step (c), the relay server may decode the card information in the received settlement information when receiving the settlement information and transmit the settlement amount and the franchise information to the settlement processing server together with the decoded card information.

Preferably, in the step (d), the settlement processing server may decode the card information in the received settlement information when receiving the settlement information and process the card settlement based on the settlement amount and the franchise information together with the decoded card information.

Preferably, the card information as information acquired from the card may include a card number, an expiration date, and a card company.

According to still yet another aspect of the present invention, a method for providing a card settlement service includes: (a) performing, by a card reader, user authentication by using a password of a user using a card and determining whether the card is a counterfeit card as a result of the user authentication; and (b) acquiring, by the card reader, card information from the card according to a result of the determination and encoding and transmitting the acquired card information.

Preferably, in the step (a), the card reader receives the password of the user using the card from the smart device and performs the user authentication by using the received password of the user to determine whether the card is the counterfeit card.

Preferably, in the step (b), the card reader may acquire the card information from the card when determining that the card is not the counterfeit card by succeeding in the user authentication as the determination result and encode the acquired card information by using a predetermined secret key or public key and transmit the encoded card information.

### [Advantageous Effects]

Therefore, card information acquired when the card information is acquired is encoded to settle a card based on the encoded card information and a password of a user is received together with acquiring the card information to perform user authentication by using the received password of the user, thereby preventing a counterfeit of the card information collected through a communication network.

Further, since the user authentication is performed by using the password of the user to prevent the counterfeit of the card information, satisfaction of the user can be improved.

### [Description of Drawings]

FIG. 1 is a diagram illustrating a system for providing a card settlement service according to an embodiment of the present invention.
FIG. 2 is a diagram illustrating a detailed configuration of a card reader according to an embodiment of the present invention.
FIG. 3A to 3D are diagrams illustrating a detailed configuration of a card reader according to another embodiment of the present invention.
FIG. 4 is a diagram illustrating a method for providing a card settlement service according to an embodiment of the present invention.
FIG. 5 is a diagram for describing an operating principle of an RFID R/W module according to an embodiment of the present invention.
FIGS. 6A and 6B are diagrams for describing an operating principle of a card reader module according to an embodiment of the present invention.
FIGS. 7A and 7B are diagrams for describing an operating principle of a 2D code reader module according to an embodiment of the present invention.
FIG. 8 is a diagram for describing operating principles of various recognition sensors according to an embodiment of the present invention.

### [Best Mode]

Hereinafter, a system for providing a card settlement service using a smart device and a method thereof according to embodiments of the present invention will be described with reference to the accompanying drawings. Parts required to understand an operation and an action according to the present invention will be primarily described in detail.

Further, in describing constituent elements of the present invention, different reference numbers may refer to like elements depending on the drawing, and like reference numerals may refer to like elements even though like elements are illustrated in different drawings. However, even in this case, it is not meant that a corresponding constituent element has a different function according to an embodiment or has the same function in different embodiments, and a function of each constituent element may be determined based on a description of each constituent element in a corresponding embodiment.

In particular, the present invention provides a new card settlement service providing method which encodes card information acquired when the card information is acquired to settle a credit card based on the encoded card information and receives a password of a user together with acquiring the card information to perform user authentication by using the received password of the user.

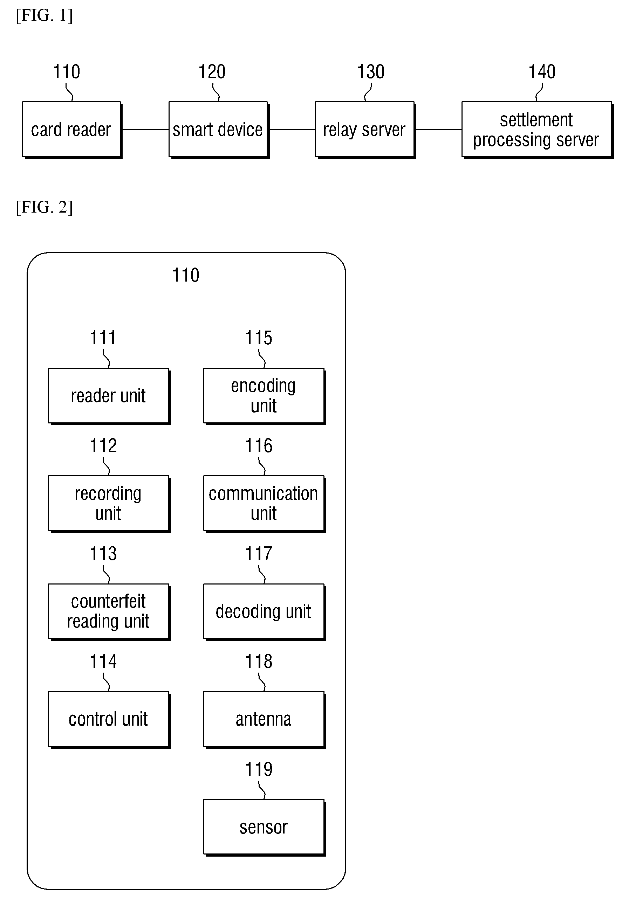

FIG. 1 is a diagram illustrating a system for providing a card settlement service according to an embodiment of the present invention.

As illustrated in FIG. 1, the system for providing a card settlement service according to the present invention may be configured to include a card reader 110, a smart device 120, a relay server 130, a settlement processing server 140, and the like.

The card reader 110 receives a password of a user, for example, a personal identification number (PIN) from the smart device 120 used by the user using a card and performs user authentication by using the received password of the user to determine whether the card is a counterfeit card as a result of performing the user authentication.

When the card reader 110 determines that the corresponding card is not the counterfeit card by succeeding in the user authentication as a determination result, the card reader 110 acquires information such as card information, for example, a card number, an expiration date, a card company, and the like from the card and encodes the acquired card information by using a predetermined secret key or a public key to transmit the encoded card information to the smart device 120.

In this case, the secret key or the public key may be upgraded through the smart device.

The smart device 120 activates a mobile application to receive a predetermined password of the user by using the activated mobile application and transmits the received password of the user to the card reader 110 to request a card settlement.

In this case, the password of the user is used to verify a user using the card with a predetermined PIN number through an agreement with the card company. When a base virtual keyboard embedded in the smart device is used, since there is an exposure of a touch event of the PIN number, a predetermined virtual keyboard is used. For example, the figure 1 is not continuously laid at the same location and the location of the figure 1 may be randomly changed whenever the figure 1 is used.

The smart device 120 receives the encoded card information from the card reader 110, generates settlement information including the received card information, a settlement amount, franchise information, and the like, and transmits the generated settlement information to the relay server 130 to request the card settlement.

In this case, when the secret key and the public key for decoding are stored, the smart device 120 may decode the card information encoded with the stored secret key or public key and transmit the decoded card information.

The relay server 130 receives the encoded settlement information from the smart device 120 and decodes the received settlement information to extract the card information and the settlement amount as a result of the decoding and transmit the extracted card information and settlement amount to the settlement processing server 140.

The settlement processing server 140 may receive the card information and the settlement amount from the relay server 130 and perform the settlement processing with the corresponding card based on the received card information and settlement amount.

In this case, when the settlement processing server 140 receives the encoded card information from the relay server 130, the settlement processing server 140 may decode the encoded card information with the predetermined secret key or public key. FIG. 2 is a diagram illustrating a detailed configuration of a card reader according to an embodiment of the present invention.

As illustrated in FIG. 2, the card reader 110 according to the present invention may be configured to include a reader unit 111, a recording unit 112, a counterfeit reading unit 113, a control unit 114, an encoding unit 115, a communication unit 116, a decoding unit 117, an antenna 118, and a sensor 119.

The reader unit 111 may acquire the card information from a contact type card, a non-contact type card, radio frequency identification (RFID), a quick response (QR) code, a barcode, and the like.

The recording unit 112 may serve to record information in a recordable medium, that is, an RFID tag.

The counterfeit reading unit 113 may determine whether the information sent by the card is valid information.

A process of reading the counterfeit card will be described below in detail by using one example. A format of an ICC public key authentication certificate used herein is described in [Table 1] given below.

**[Table 1]**

| Field | Length | Description |
|---|---|---|
| Header | 1 | '6A' |
| Format Code | 1 | 0x04 |
| ID | 4 | Issuer ID |
| ICC ID | 6 | ICC ID |
| CED | 2 | Certificate expiration date (MM/YY) |
| CSN | 3 | Certificate order number granted by issuer CA (Binary Number) |
| ALGH | 1 | Hash algorithm ID, '01'dms SHA-1 |
| ALGP | 1 | Public key algorithm ID |
| LPKM | 1 | Public key modulus |
| LPKE | 1 | Exponent length |
| PKM | LPKM | Public key modulus |
| PKE | LPKE | Exponent |
| Hash | 20 | Hash value for certificate data |
| Trailer | 1 | 'BC' |

1. Whether the length of the ICC public key certificate is the same as the length of the public key modulus of the issuer are compared.
2. The ICC public key certificate is decoded with the issuer public key through an algorithm defined in a public key format and whether a trailer of the decoded data is the same as 'BC' is compared.
3. Whether a header of the decoded data is '6A' is compared.
4. The certificate format is examined. Herein, the ICC public key certificate is '04'.
5. The decoded data is connected with a remainder and an exponent to configure issuer public key data.
6. A hash value of the public key data is calculated by using a hash algorithm designed with a hash algorithm ID in the issuer public key data.
7. Whether the calculated hash value is the same as the hash value included in the decoded data is compared.
8. Whether a decoded PAN value coincides with application PAN is examined.
9. The expiration date of the public key certificate is examined. Whether a value of an expiration date field is equal to or larger than a current date is compared and when the value of the expiration date field is smaller than the current date, this case is processed as expiration of the expiration date.
10. Whether the ICC public key algorithm ID may be recognized is examined.
11. When all examinations are successful, the issuer public key and the remainder value are summed up and thereafter, SSAD is performed.

The control unit 114 may control reading or writing and control encoding or decoding.

The encoding unit 115 may encode the acquired card information with the predetermined secret key or public key. The encoding unit 115 may encode information for recording in the RFID tag.

The communication unit 116 may transmit the encoded card information through wired or wireless communication. Herein, the wireless communication may be a concept embracing, for example, Bluetooth, NFC, RFID, and the like.

The decoding unit 117 may decode the encoded card information with the predetermined secret key or public key.

The antenna 118 may transmit/receive a signal suitable for a frequency of 13.56 MHz, UHF, Bluetooth, or the like.

The sensor 119 as a recognition sensor may include, for example, a radiation recognition sensor, a pesticides detection sensor, and the like.

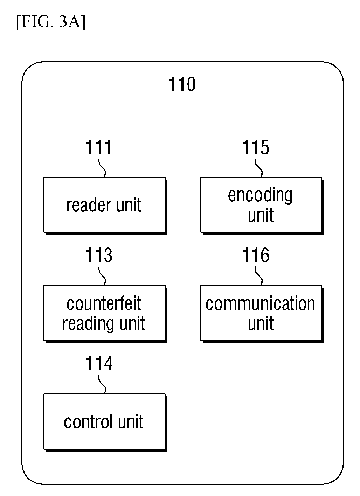

FIG. 3A to 3D are diagrams illustrating a detailed configuration of a card reader according to another embodiment of the present invention.

As illustrated in FIG. 3A to 3D, the card reader 110 according to the present invention may be implemented in various forms according to a situation and the forms may be mixedly implemented.

Referring to FIG. 3A, the card reader 110 according to the present invention as a card reader module is implemented to include the reader unit, the counterfeit reading unit, the control unit, the encoding unit, the communication unit, and the like.

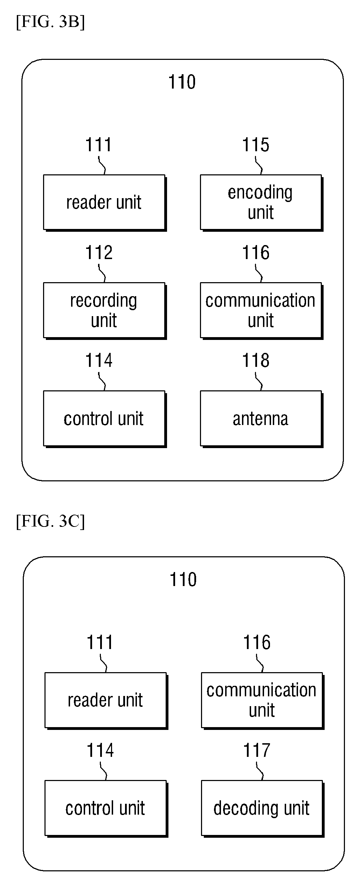

Referring to FIG. 3B, the card reader 110 according to the present invention as an RFID read/write (R/W) module is implemented to include the reader unit, the recording unit, the control unit, the encoding unit, the communication unit, the antenna, and the like.

Referring to FIG. 3C, the card reader 110 according to the present invention as a 2D code reader module such as a QR code or a barcode is implemented to include the reader unit, the control unit, the communication unit, the decoding unit, and the like.

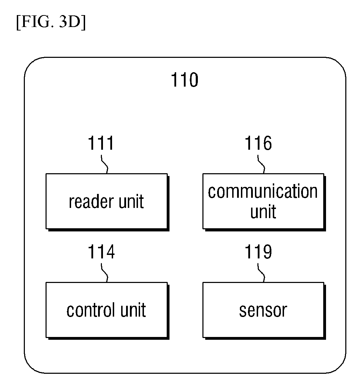

Referring to FIG. 3D, the card reader 110 according to the present invention as a reader module by various recognition sensors is implemented to include the reader unit, the control unit, the communication unit, the sensor, and the like.

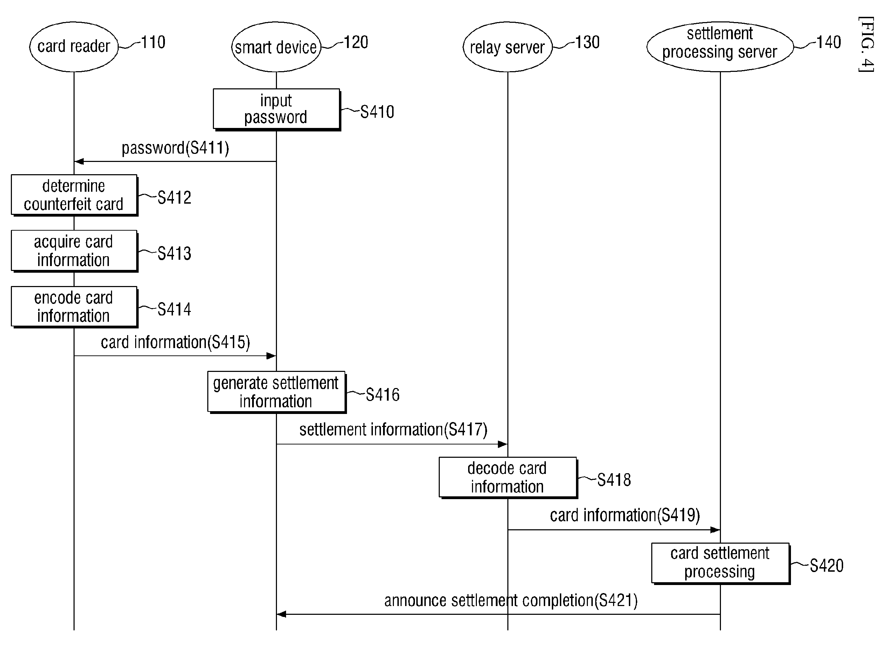

FIG. 4 is a diagram illustrating a method for providing a card settlement service according to an embodiment of the present invention.

As illustrated in FIG. 4, first, a smart device may receive a password of a user from the user in a card settlement (S410) and transmit the received password of the user to a card reader(S411).

Next, when the card reader receives the password of the user, the card reader may determine whether a card to be used in settlement is a counterfeit card based on the received password of the user (S412).

Next, when the corresponding card is not the counterfeit card as a result of the determination, the card reader may acquire card information from the card (S413) and encode the acquired card information (S414) and transmit the encoded card information to the smart device (S415). On contrary, when the card reader determines that the corresponding card is the counterfeit card, the card reader denies a corresponding settlement request.

Next, when the smart device receives the encoded card information, the smart device receives a settlement amount to be settled from the user to generate settlement information including the received settlement amount, the encoded card information, and franchise information (S416) and transmit the generated settlement information to a relay server (S417).

Next, when the relay server receives the settlement information, the relay server decodes the card information included in the received settlement information (S418) to transmit the decoded card information, settlement amount, and franchise information to a settlement processing server (S419).

Next, when the settlement processing server receives the decoded card information, settlement amount, and franchise information, the settlement processing server may perform the card settlement based on the received card information, settlement amount, and franchise information (S420).

Next, the settlement processing server may announce to the smart device that card settlement processing is completed (S421).

Hereinafter, an operating principle of processing information according to a form of the card reader will be described.

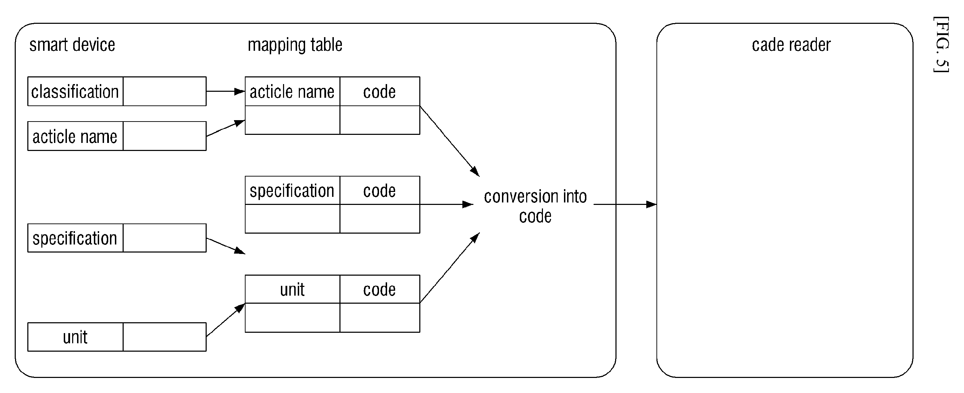

FIG. 5 is a diagram for describing an operating principle of an RFID R/W module according to an embodiment of the present invention.

As illustrated in FIG. 5, the RFID R/W module according to the present invention possesses an ID for verifying an identity to verify the user and whether the corresponding ID is permitted is stored in a server.
1) In the case of a write mode, the RFID R/W module may transmit the ID thereof to the smart device. When the smart device receives information to be recorded in an RFID tag, the smart device may transmit a terminal ID together with the received information. In the case of a value input in the smart device, the length of transmitted data may be reduced by transmitting a code value for each input value and the terminal ID is included and transmitted together with the input value to verify who records data later.
   The RFID R/W module encodes all data received from the smart device by using an embedded secret key or public key, records the encoded data in the RFID tag, and displays in the smart device an ID of the RFID tag in which the encoded data is recorded.
   The smart device transmits to the server the received information and the ID of the RFID tag, which is acquired through the RFID R/W module. Therefore, the RFID tag information and the information stored in the server are compared with each other to verify whether the RFID tag information is counterfeit according to a result of the comparison.
2) In the case of a read mode, the RFID R/W module reads memory information of the RFID tag and the ID information of the RFID tag and transmits the read memory information and ID information to the smart device. The smart device decodes data through an embedded decoding algorithm to acquires a code value and terminal ID information as a result of the decoding and display a result acquired by comparing the acquired code value and a mapping table and the ID information of the RFID tag in the smart device. Therefore, since the smart device does not acquire a data result by accessing the server, the number of communication times may be reduced.

The smart device determines reliability of the identity of a data recorder by reading whether the corresponding user is a verified user by transmitting the terminal ID to the server and displays, for example, a phrase 'the data recorder is a person which is untrustworthy' for the untrustworthy person as a result of the determination. Therefore, it is possible to shorten a time required to verify whole data.

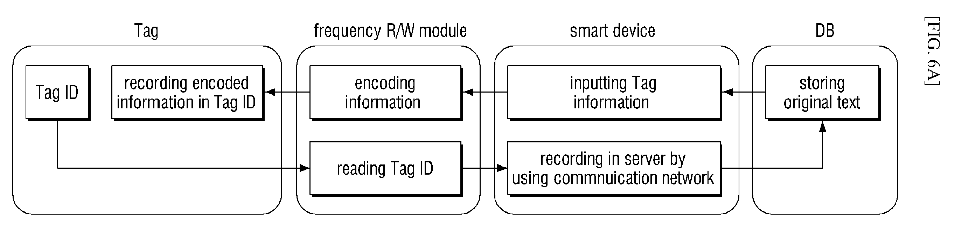

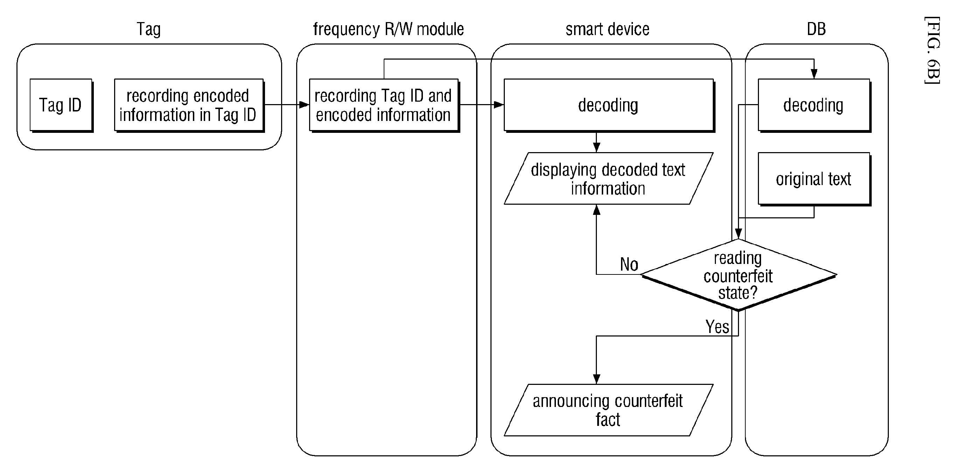

FIGS. 6A and 6B are diagrams for describing an operating principle of a card reader module according to an embodiment of the present invention.

Referring to FIG. 6A, information to be recorded in the tag is received through the smart device and the card reader module encodes the received information and records the encoded information in the tag.

The card reader module collects an ID of the tag in which the encoded information is recorded to store the ID of the tag and an original text of the information recorded in the tag in a database through a communication device.

Referring to FIG. 6B, the card reader module acquires the information of the tag, for example, the tag ID, the encoded information, and the like and the smart device decodes the encoded information.

In this case, the information decoded by the smart device or the server is compared with the original text to read whether the decoded information is counterfeit.

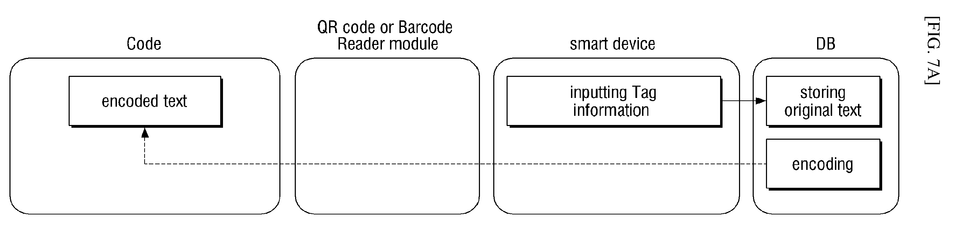

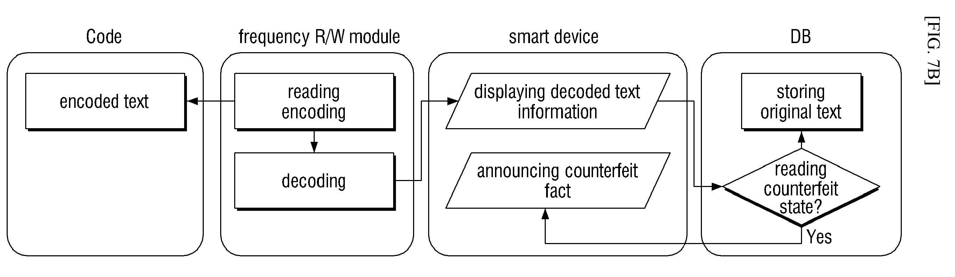

FIGS. 7A and 7B are diagrams for describing an operating principle of a 2D code reader module according to an embodiment of the present invention.

Referring to FIG. 7A, the smart device receives information to be displayed with a code and stores the received information in the original text of the database. The database encodes the original text to generate the encoded original text as a QR code or barcode and record the generated QR code or barcode in the tag.

Referring to FIG. 7B, the code reader module acquires an encoded text stored in the code and decodes the encoded text to acquire a decoded text and the smart device displays and transmits the decoded text to the database.

In this case, the information decoded by the smart device or the server is compared with the original text to read whether the decoded information is counterfeit.

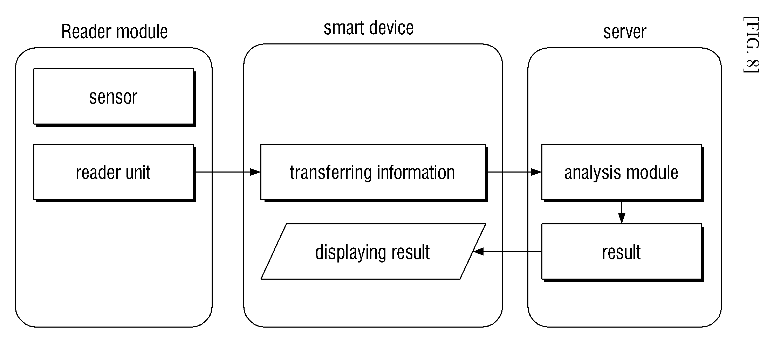

FIG. 8 is a diagram for describing operating principles of various recognition sensors according to an embodiment of the present invention.

As illustrated in FIG. 8, a module in which various recognition sensors of radiation or pesticides component detection are embedded acquires sensor information and transmits the acquired sensor information to the server through the smart device.

The server analyzes transmitted data and provides a result of the analysis to the smart device.

Meanwhile, the above-described embodiments of the present invention may be created by a computer executable program and implemented in a universal digital computer which operates the program using a computer readable recording medium. The computer readable recording media include a storing medium such as a magnetic storage medium (for example, a ROM, a floppy disk, a hard disk, and the like), and an optical reading medium (for example, CD-ROM, a DVD, and the like).

Various modifications and transforms of the embodiments described hereinabove as an example can be made by those skilled in the art within the scope without departing from an essential feature of the present invention. Therefore, the embodiments disclosed in the present invention are used to not limit but describe the technical spirit of the present invention and the scope of the technical spirit of the present invention is not limited by the embodiments. The scope of the present invention should be interpreted by the appended claims and it should be analyzed that all technical spirits in the equivalent range are intended to be embraced by the present invention.

## Claims

1. A system for providing a card settlement service, the system comprising:
a card reader performing user authentication by using a password of a user using a card, determining whether the card is a counterfeit card as a result of the user authentication, acquiring card information from the card according to a result of the determination, and encoding and transmitting the acquired card information;
a smart device generating, when receiving the encoded card information, settlement information including the received card information, a settlement amount, and franchise information and transmitting the generated settlement information;
a relay server transferring the transmitted settlement information; and
a settlement processing server processing, when receiving the settlement information, card settlement based on the card information, the settlement amount, and the franchise information included in the received settlement information.

2. The system for providing a card settlement service of claim 1, wherein the card reader receives the password of the user using the card from the smart device and performs the user authentication by using the received password of the user to determine whether the card is the counterfeit card.

3. The system for providing a card settlement service of claim 2, wherein:
the card reader
acquires the card information from the card when determining that the card is not the counterfeit card by succeeding in the user authentication as the determination result and
encodes the acquired card information by using a predetermined secret key or public key and transmits the encoded card information.

4. The system for providing a card settlement service of claim 1, wherein:
the smart device
receives a settlement amount to be settled from the user when receiving the encoded card information and
generates and transmits the settlement information including the franchise information together with the card information and the settlement amount.

5. The system for providing a card settlement service of claim 1, wherein:
the relay server
decodes the card information in the received settlement information when receiving the settlement information and
transmits the settlement amount and the franchise information to the settlement processing server together with the decoded card information.

6. The system for providing a card settlement service of claim 1, wherein:
the settlement processing server
decodes the card information in the received settlement information when receiving the settlement information and
processes the card settlement based on the settlement amount and the franchise information together with the decoded card information.

7. The system for providing a card settlement service of claim 1, wherein the card information as information acquired from the card includes a card number, an expiration date, and a card company.

8. A system for providing a card settlement service comprising:
a card reader performing user authentication by using a password of a user using a card, determining whether the card is a counterfeit card as a result of the user authentication, acquiring card information from the card according to a result of the determination, and encoding and transmitting the acquired card information.

9. The system for providing a card settlement service of claim 8, wherein the card reader receives the password of the user using the card from a smart device and performs the user authentication by using the received password of the user to determine whether the card is the counterfeit card.

10. The system for providing a card settlement service of claim 9, wherein:
the card reader
acquires the card information from the card when determining that the card is not the counterfeit card by succeeding in the user authentication as the determination result and
encodes the acquired card information by using a predetermined secret key or public key and transmits the encoded card information.

11. A method for providing a card settlement service, the method comprising:
(a) performing, by a card reader, user authentication by using a password of a user using a card, determining whether the card is a counterfeit card as a result of the user authentication, acquiring card information from the card according to a result of the determination, and encoding and transmitting the acquired card information;
(b) generating, by a smart device, when receiving the encoded card information, settlement information including the received card information, a settlement amount, and franchise information and transmitting the generated settlement information;
(c) transferring, by a relay server, the transmitted settlement information; and
(d) processing, by a settlement processing server, when receiving the settlement information, card settlement based on the card information, the settlement amount, and the franchise information included in the received settlement information.

12. The method for providing a card settlement service of claim 11, wherein in the step (a), the card reader receives the password of the user using the card from the smart device and performs the user authentication by using the received password of the user to determine whether the card is the counterfeit card.

13. The method for providing a card settlement service of claim 12, wherein:
in the step (a),
the card reader acquires the card information from the card when determining that the card is not the counterfeit card by succeeding in the user authentication as the determination result and
encodes the acquired card information by using a predetermined secret key or public key and transmits the encoded card information.

14. The method for providing a card settlement service of claim 11, wherein:
in the step (b),
the smart device receives a settlement amount to be settled from the user when receiving the encoded card information, and
generates and transmits the settlement information including the franchise information together with the card information and the settlement amount.

15. The method for providing a card settlement service of claim 11, wherein:
in the step (c),
the relay server decodes the card information in the received settlement information when receiving the settlement information and
transmits the settlement amount and the franchise information to the settlement processing server together with the decoded card information.

16. The method for providing a card settlement service of claim 11, wherein:
in the step (d),
the settlement processing server decodes the card information in the received settlement information when receiving the settlement information and
processes the card settlement based on the settlement amount and the franchise information together with the decoded card information.

17. The method for providing a card settlement service of claim 11, wherein the card information as information acquired from the card includes a card number, an expiration date, and a card company.

18. A method for providing a card settlement service comprising:
(a) performing, by a card reader, user authentication by using a password of a user using a card and determining whether the card is a counterfeit card as a result of the user authentication; and
(b) acquiring, by the card reader, card information from the card according to a result of the determination, and encoding and transmitting the acquired card information.

19. The method for providing a card settlement service of claim 18, wherein in the step (a), the card reader receives the password of the user using the card from a smart device and performs the user authentication by using the received password of the user to determine whether the card is the counterfeit card.

20. The method for providing a card settlement service of claim 19, wherein:
in the step (b),
the card reader acquires the card information from the card when determining that the card is not the counterfeit card by succeeding in the user authentication as the determination result and
encodes the acquired card information by using a predetermined secret key or public key and transmits the encoded card information.
